(19) Europäisches Patentamt
European Patent Office
Office européen des brevets

(11) Veröffentlichungsnummer: **0 084 642**
**B1**

(12) # EUROPÄISCHE PATENTSCHRIFT

(45) Veröffentlichungstag der Patentschrift: **15.06.88**

(51) Int. Cl.⁴: **C 08 G 8/04,** C 08 G 61/02

(21) Anmeldenummer: **82111484.0**

(22) Anmeldetag: **10.12.82**

(54) **Verfahren zur Herstellung eines Kunstharzes, das Triaromatmethaneinheiten als Grundbausteine aufweist.**

(30) Priorität: **17.12.81 DE 3150007**
**22.11.82 DE 3243151**

(43) Veröffentlichungstag der Anmeldung:
**03.08.83 Patentblatt 83/31**

(45) Bekanntmachung des Hinweises auf die Patenterteilung:
**15.06.88 Patentblatt 88/24**

(84) Benannte Vertragsstaaten:
**AT BE CH DE FR GB IT LI LU NL SE**

(56) Entgegenhaltungen:
**EP-A-0 017 455**
**DE-A-1 445 198**
**DE-A-2 016 355**
**DE-A-2 417 182**

**Chemical Abstracts, Band 87, Nr. 17, 24. Oktober 1977, Columbus, Ohio, USA, J.M.J. FRECHET "Synthesis and applications of functionalized polystyrene resins. Chlorodiphenylpolystyrylmethane", p. 792, abstract nr. 136284z**

(73) Patentinhaber: **BROWN, BOVERI & CIE Aktiengesellschaft**
**Kallstadter Strasse 1**
**D-6800 Mannheim 31 (DE)**

(72) Erfinder: **Weddigen, Gert, Dr.**
**Max-Reger-Strasse 23**
**D-6900 Heidelberg (DE)**
Erfinder: **Holzer, Herbert, Dr.**
**Wingertsweg 15**
**D-6114 Grossumstadt (DE)**
Erfinder: **Kleinschmager, Herbert, Dr.**
**Meerfeldstrasse 31**
**D-6800 Mannheim (DE)**

(74) Vertreter: **Kempe, Wolfgang, Dr. et al**
**c/o BROWN, BOVERI & CIE AG ZPT Postfach 351**
**D-6800 Mannheim 31 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**EP 0 084 642 B1**

(58) References cited:

Chemical Abstracts, Band 70, Nr. 26, 30. Juni 1969, Columbus, Ohio, USA, P. FINOCCHIARO et al. "Low-temperature polymerization of benzyl chlorides", p. 6, abstract nr. 115624u
Chemical Abstracts, Band 73, Nr. 20, 16. November 1970, Columbus, Ohio, USA, G. MONTAUDO et al. "Polycondensation of benzyl chloride and its derivatives: reaction at different temperatures", p. 4, abstract nr. 99252a

BEILSTEINS HANDBUCH DER ORGANISCHEN CHEMIE, 4. Auflage, Band 5, 1922, Verlag J. Springer, Berlin, p. 590

Chemical Abstracts, Band 67, Nr. 22, 27. November 1967, Columbus, Ohio, USA, G. MONTAUDO et al. "Polybenzyls. IV. Autocondensation of benzyl chloride derivatives", p. 9470, abstract nr. 100469m
S.R. SANDLER et al. "Polymer Syntheses", Band II, 1977, Academic Press, New York, San Francisco, London, p. 64, 65

JOURNAL OF THE AMERICAN CHEMICAL SOCIETY; Band 103, Nr. 25, 16. Dezember 1981, Washington D.C., USA B.J. COHEN et al. "Wolf and Lamb" reactions: Equilibrium and kinetic effects in multipolymer systems", p. 7620-7629
Chemical Abstracts, Band 69, Nr. 6, 9. August 1968, Columbus, Ohio, USA, p. 1891, abstract nr. 19962m

Chemical Abstracts, Band 78, Nr. 22, 4. Juni 1973, Columbus, Ohio, USA, p. 77, abstract nr. 137679h

**Beschreibung**

Die Erfindung bezieht sich auf ein Verfahren zur Herstellung eines Kunstharzes, das beispielsweise für die Fertigung von Abdeckhauben und Schutzüberzügen von elektrischen Geräten geeignet ist.

In der Elektrotechnik besteht ein großer Bedarf an Kunstharzen, deren elektrische stationäre Leitfähigkeit bezogen auf den Querschnitt des Kunstharzes innerhalb gewisser Grenzen frei wählbar ist. Mit diesen Kunstharzen ist es zum einen möglich, noch eine ausreichende Isolierwirkung aufrecht zu erhalten, und gleichzeitig zu erreichen, daß die stationäre Volumenleitfähigkeit der aus den Kunstharzen gefertigten Bauteile größer ist als die Leitfähigkeit von sich eventuell einstellenden Oberflächenverschmutzungen der Oberflächenbeläge.

Bis jetzt werden in der Elektrotechnik hierfür Epoxidharze und Polyamide verwendet.

Von Nachteil ist bei diesen Kunstharzen, daß sie für das Spritzgießen und Spritzlackieren ungeeignet sind.

Der Erfindung liegt deshalb die Aufgabe zugrunde, ein Verfahren anzugeben, mit dem sehr kostengünstig ein Kunstharz hergestellt werden kann, das leicht löslich ist und sowohl beim Spritzgießen als auch beim Spritzlackieren verwendet werden kann.

Diese Aufgabe wird erfindungsgemäß durch die Polykondensation mindestens eines aromatischen Alkylyds und wenigstens eines aromatischen Ringsystem gelöst, in welchem Ringsystem mindestens zwei H-Atome durch mindestens zwei funktionelle Gruppen ersetzt sind, durch welche die Elektronendichte an mindestens zwei Stellen im Ringsystem erhöht wird.

Erfindungsgemäß wird das Polymer bei der Polykondensation von Bisphenol-A und 4-Dimethylaminobenzaldehyd gebildet.

Bei der Bildung des Polymers durch eine Polykondensation wird die Tatsache ausgenutzt, daß die OH-Gruppe des Bisphenols-A beim orthoständigen H-Atom 2 die Elektronendichte erhöht. Dieser Sachverhalt wird durch die nachfolgend dargestellte Resonanzstruktur verdeutlicht:

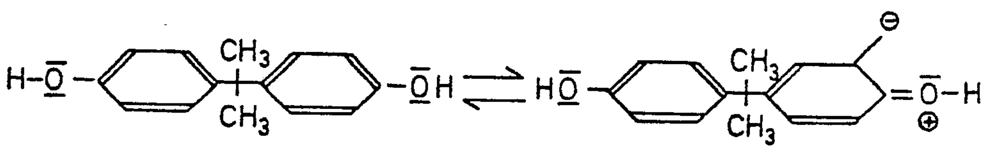

Die dargestellte Resonanzstruktur mit der erhöhten Elektronendichte in Orthostellung zur OH-Gruppe läßt erkennen, daß der Carbonylkohlenstoff des Benzaldehyds das Bisphenol-A Molekül in Orthostellung zur OH-Gruppe elektrophil angegreift.

Anhand des nachfolgenden Reaktionsschemas wird gezeigt, wie ein Benzaldehydmolekül mit zwei Bisphenol-A Molekülen reagiert.

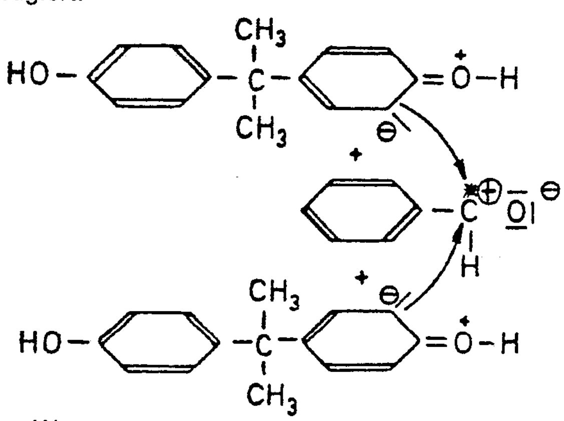

Unter Abspaltung von Wasser wird die nachfolgend dargestellte Verbindung bei der ablaufenden chemischen Reaktion gebildet:

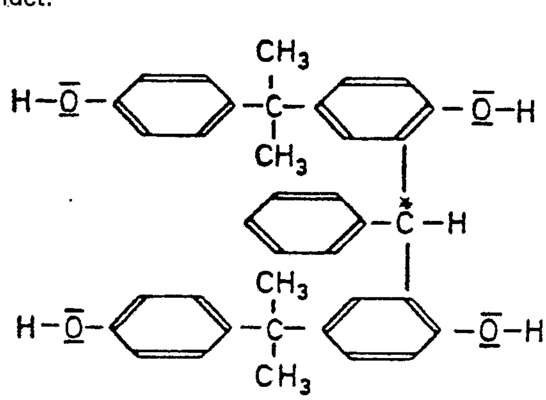

Die enstandene Verbindung enthält das Kohlenstoffatom C*, welches seine Vierbindigkeit durch die Verknüpfung mit drei Phenylresten und einem Wasserstoffatom realisiert. Diese Wasserstoffatom kann durch ein Halogenid, ein Alkalimetall oder eine organische funktionelle Gruppe substituiert sein. Durch die beschriebene Reaktion ist also ein Triaromatmethansystem, insbesondere ein Triaphenylmethansystem entstanden.

Durch die Wahlt der Reaktionsbedingungen, wie zum Beispiel die geeignete Wahl des Mol-Verhältnisses zwischen Bisphenol-A und Benzaldehyd, der Reaktionstemperatur und des Katalysators kann erreicht werden, daß weitere Benzaldehydmoleküle das bis jetzt gebildete Triphenylmethansystem vornehmlich an den restlichen elektronenreichen noch nicht substituierten Orthostellungen zu den vorhandenen OH-Gruppen angreifen. Dabei werden oligomere- bzw. polymere-Ketten gebildet. Die bei der Polykondensation angestrebte Reaktionstemperatur liegt vornehmlich zwischen 80 und 130°C. Als Katalysator wird vorzugsweise eine Säure verwendet. Das Molverhältnis zwischen Bisphenol-A und Benzaldehyd sollte 1:1 gewählt werden. Durch Infrarot- und Gelpermationschromatographie-Untersuchungen kann nachgewiesen werden, daß bei der Polykondensation ein Polymer mit der nachfolgenden Strukturformel gebildet wird:

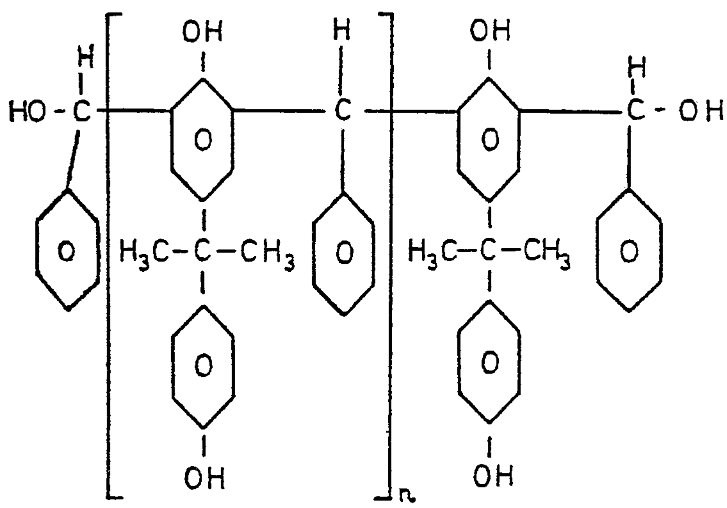

Das so gebildete Polymer enthält sich überlappende Triphenylmethaneinheiten. Bei benachbarten Triphenylmethaneinheiten ist ein aromatischer Ring jeweils gemeinsamer Bestandteil.

Bei der Polykondensation von Bisphenol-A und para-Anisaldehyd wird ein Polymer mit der analogen Strukturformel gebildet.

Eine Polymerkette mit periodisch aneinandergefügten Triphenylmethaneinheiten, wobei Benzolringe nicht als Schnittmengen fungieren, ist in der nachfolgenden Strukturformel dargestellt.

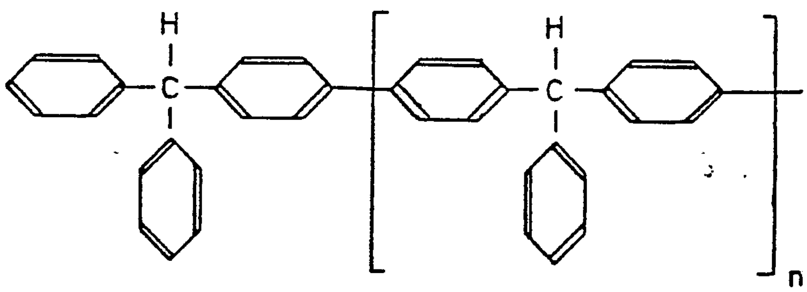

Ein solches Polymer kann durch die katalytisch Reaktion von Triaromatmethaneinheiten unter Verwendung von Lewissäuren als Katalysator gebildet werden.

Bekannt ist die niedermolekulare Verbindung Triphenylmethan. Diese Verbindung ist in der Lage, ein sehr stabiles Radikal zu bilden, dessen Strukturformel nachfolgend dargestellt ist:

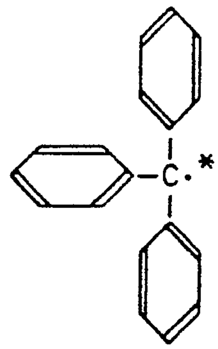

Dieses sogenannte Tritylradikal bezieht seine Stabilität aus der Tatsache, daß das ungepaarte Elektron am ringexternen Kohlenstoff C* nicht lokalisiert ist. Dies läßt sich anhand von Elektronenspinresonanz-Untersuchungen beweisen. Das Tritylradikal kann auch die nachfolgend dargestellten Strukturen aufweisen:

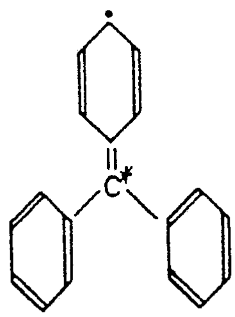

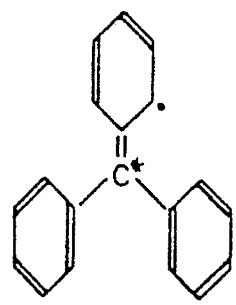

Bei den beiden zuletzt dargestellten Strukturen ist eine Doppelbindung zwischen dem ringexternen Kohlenstoff C* und einem C-Atom der aromatischen Ringe vorhanden. Das heißt, die Delokalisierbarkeit des ungepaarten Elektrons kann sowohl in den drei Ringsystemen als auch im ringexternen C-Atom C* realisiert werden.

Wenn diese Triphenylmethanstruktur periodisch in einer Polymerkette realisiert ist, ungeachtet, ob einer der aromatischen bzw. heterozyklisch-aromatischen Ring Schnittmenge zwischen zwei benachbarten Triphenylmethaneinheiten ist, so kann in dieser Polymerkette die Delokalisierung ungepaarter Elektronen sowohl in den aromatischen Ringen als auch bei den ringexternen C-Atomen erfolgen. Dieser Effekt ist günstig für die elektronische Leitfähigkeit des Polymers bzw. für das Potential, die Leitfähigkeit des Polymers durch Bildung von Charge-Transfer-Komplexen zu erhöhen.

Nachfolgend wird das erfindungsgemäße Verfahren anhand von zwei Beispeilen beschrieben:

1. Beispiel

Im dem nachfolgend beschriebenen Beispiel wird das das Kunstharz bildende Polymer durch Polykondensation von Bisphenol-A und 4-Dimethylaminobenzaldehyd hergestellt. Als Katalysator dient Salzsäure. Zur Herstellung einer kleineren Menge des Kunstharzes werden 15,7 g Bisphenol-A, 8,4 g 4-Dimethylaminobenzaldehyd, 0,1 g Salzsäure sowie 2 ml Äthanol in einen Dreihalskolben eingefüllt und erwärmt. Bei einer Temperatur von 40°C entsteht eine homogene hellbraun gefärbte Lösung. Diese wird 1,5 Stunden lang unter Rückfluß in einer Stickstoffatmosphäre gekocht. Die Losung färbt sich beim Erreichen einer Temperatur von 84°C dunkelbraun. Nach Ende der Reaktionszeit ist die Lösung dunkelgrün gefärbt. Beim Zugeben von $H_2O$ bilden sich zwei Phasen aus. Die wässrige Phase ist heller grün als die organische Phase. Bei dem Abtrennen der wässrigen Phase wird das Reaktionsprodukt im Rotationsverdampfer behandelt, wobei braungefärbtes Äthanol abdestilliert wird. Das gereinigte Produkt ist grün und hat einen Schmelzpunkt bei 78°C. Die Menge des erzeugten Reaktionsprodukts beträgt 22 g. Es weist eine stationäre Leitfähigkeit von $10^{-9}$ (Ohm $\times$ cm)$^{-1}$ auf.

2. Beispiel

Hier werden für die Herstellung des erfindungsgemäßen Kunstharzes 15,75 g Bisphenol-A und 7,7 g para-Anisaldehyd in einen Dreihalkolben gefüllt. Bei der Zugabe von 0,1 g Salzsäure färbt sich das Gemisch hellrosa. Es wird auf 130°C erhitzt und 1,5 h lang unter Ruckfluß gekocht, wobei es sich von violett zu dunkelrot färbt. Nach dem Abkühlen wird mit $H_2O$ kurz aufgerührt. Anschließend wird das $H_2O$ abgetrennt. Die organische Phase wird im Rotationsverdampfer bei 150°C behandelt. Zurück bleibt ein dunkelrotes festes Polymer. Die Menge des gewonnenen Reaktionsproduktes beträgt 21,4 g.

Durch geeignete Wahl der für die Durchführung des Verfahrens verwendeten Stoffe kann ein Kunstharz hergestellt werden, dessen Schmelzpunkt oberhalb von 90°C liegt. Das mit dem erfindungsgemäßen Verfahren gewonnene Kunstharz weist nicht nur ein sehr großes Molekulargewicht auf, sondern kann auch unter Zuhilfenahme von Diisocyanaten aufgeschäumt werden. Das erfindungsgemäße Kunstharz kann sowohl in Dimethylformamid, Tetrahydrofuran und Aceton gelöst werden. Ferner ist das erfindungsgemäße Kunstharz als Basismaterial für die Herstellung von Klebern geeignet. Das erfindungsgemäße Kunstharz kann nicht nur zur Beschichtung von Gehäusen elektrischer Geräte verwendet werden, vielmehr ist es auch zur Beschichtung von Bauelementen geeignet, die zur Verkleidung von Wänden un Möbel verwendet werden. Unter der Einwirkung von chemischen Stoffen bleibt das erfindungsgemäße Kunstharz dauerhaft stabil.

Bei dem erfindungsgemäßen Verfahren können die Ketten des Polymers auch bei der Polykondensation mindestens eines aromatischen Aldehyds und wenigstens eines aromatischen Ringsystems gebildet werden, derart, daß in dem Ringsystem mindestens zwei H-Atome durch mindestens zwei funktionelle Gruppen ersezt werden, durch welche die Elektronendichte im Ringsystem erhöht wird.

Erfindungsgemäß kann das Polymer auch bei der polykondensation wenigstens eines aromatischen Aldehydes und mindestens eines wenigstens zwei OH-Gruppen enthaltenden Ringsystems gebildet werden.

Es besteht ferner die Möglichkeit, daß das Polymer auch bei Polykondensation wenigstens eines aromatischen Aldehydes und mindestens eines wenigstens zwei SH- oder Amino-gruppen enthaltenden aromatischen Ringsystems gebildet wird. Als aromatisches Ringsystem mit zwei SH-Gruppen ist z.B. Dimercaptobenzol geeignet.

Für die Herstellung des erfindungsgemäßen Kunstharzes ist die Verwendung eines die Polykondensation unterstützenden Katalysators erforderlich. Vorzugsweise wird hierfür Salzsäure verwendet.

Besonders gut lassen sich die das Polymer bildenden Ketten durch die polykondensation eines aromatischen Aldehydes und eines Benzolringes bilden, bei dem mindestens zwei in Metastellung befindliche H-Atome durch jeweils eine OH-Gruppe ersetzt werden. Die Bildung von sich überlappenden Triaromatmethaneinheiten, aus welchen die Grundbausteine der Polymerketten bestehen, wird nachfolgend anhand der bei der Polykondensation zwischen Benzaldehyd und Resorcin alblaufenden Reaktionen erlaütert. Bei der Bildung des Polymers kann unter anderem die Tatsache ausgenutzt werden, daß die beiden OH-Gruppen des Resorcins bei ihren beiden benachbarten H-Atomen 1,3 oder 5 die Elektronendichte erhöhen. Dieser Sachverhalt wird durch die nachfolgend dargestellte Resonanzstruktur verdeutlicht:

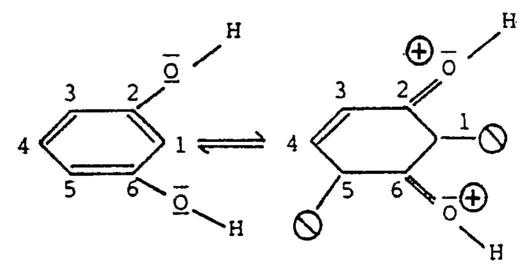

Die Elektronendichteverteilung beim Resorcin ist anhand der nachfolgenden Strukturformel dargestellt. Insbesondere ist festzustellen, daß die Elektronendichte in den Positionen 3 und 5 alterniert. Wie die Strukturformel zeigt, beträgt die Elektronendichte bei den H-Atomen 1, 3 oder 5 $(-83/1000)e_0$ bzw. $(-112/1000)e_0$. Bei $e_0$ handelt es sich um die Einheitsladung.

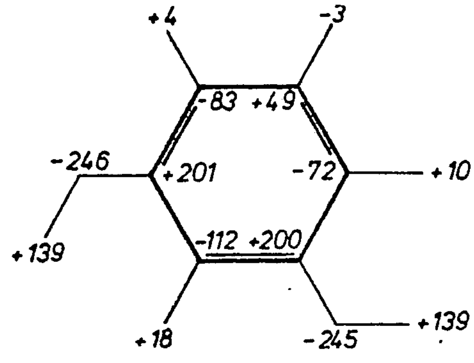

Resorcin

Es ist gleichzeitig zu erkennen, daß die Carbonylkohlenstoffe des Benzaldehyds durch Resorcin-Moleküle an zwei Stellen elektrophil angegriffen werden können, insbesondere an den Stellen 1 und 3.

Anhand des nachfolgenden Reaktionsschemas wird aufgezeigt, wie Benzaldehyd-Moleküle mit Resorcin-Molekülen chemisch reagieren.

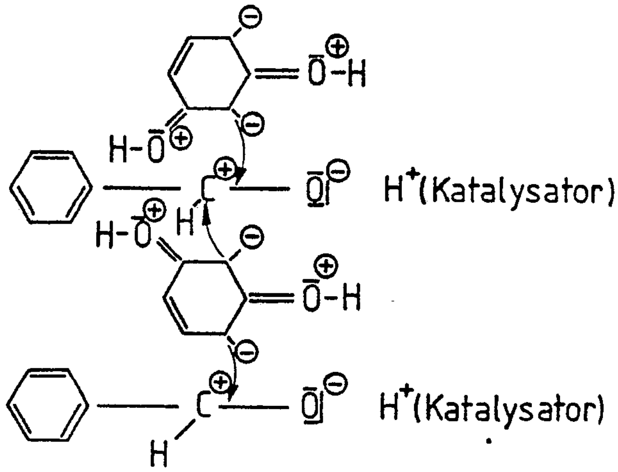


Unter Abspaltung von Wasser wird die nachfolgend dargestellte Verbindung bei der ablaufenden chemischen Reaktion gebildet:

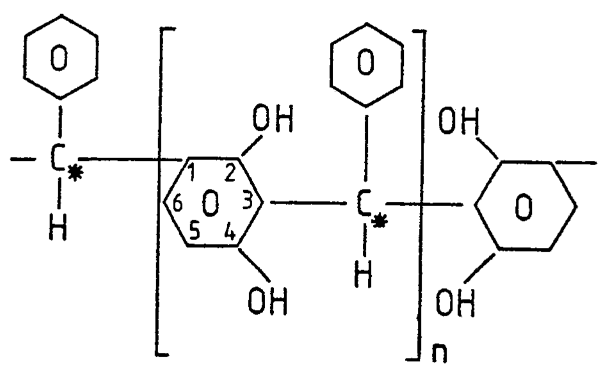

Es handelt sich hierbei um Poly (2,4-Dihydroxy-1,3-Phenylen-Phenylmethylen). Insbesondere werden bei dieser chemischen Reaktion Polykondensate mit sich überlappenden Triaromatmethaneinheiten gebildet. Die dargestellte Verbindung enthält die Kohlenstoffatome C*, welche ihre Vierbindigkeit durch die Verknüpfung mit drei Phenylringen und einem Wasserstoffatom realisieren. Dieses Wasserstoffatom kann durch ein Halogenatom, ein Alkalimetall oder eine organische funktionelle Gruppe substituiert werden. Durch die beschriebene Reaktion ist also ein Triaromatmethansystem, insbesondere ein Triphenylmethansystem entstanden. Durch die Wahl der Reaktionsbedingungen, wie beispielsweise die geeignete Wahl des Mol-Verhältnisses zwischen Resorcin und Benzaldehyd, der Reaktionstemperatur und des Katalysators kann erreicht werden, daß weitere Benzaldehymoleküle das bis jetzt gebildete Triphenylmethansystem vornehmlich an den restlichen Elektronen reichen noch nicht substituierten H-Atomen in der Nachbarschaft zu den OH-Gruppen angreifen. Dabei werden oligomere- bzw. polymere Ketten gebildet. Die bei der Polykondensation angestrebte Reaktionstemperatur liegt bei etwa 70°C. Als Katalysator wird vorzugsweise eine Säure verwendet, insbesondere Salzsäure. Das Mol-Verhlältnis zwischen Resorcin und Benzaldehyd sollte 1:1 gewählt werden. Zwei aufeinanderfolgende Triphenylmethaneinheiten besitzen jeweils einen aromatischen Ring als gemeinsamen Bestandteil.

Die Herstellung des erfindungsgemäßen Kunstharzes unter Verwendung von Resorcin und Benzaldehyd wird nachfolgend beschrieben:

3. Beispiel

Erfindungsgemäß wird das Kunstharz in dem nachfolgend beschrieben Beispiel durch die Polykondensation von Resorcin und Benzaldehyd hergestellt. Als Katalysator wird Salzsäure verwendet. Insbesondere werden 6 g Resorcin (ungefähr 0,06 Mol) und 6 g Benzaldehyd (ungefähr 0,06 Mol) in hundert Milliliter Aceton gelöst. Die Reaktionslösung wird anschließend gerührt und gleichzeitig mit Hilfe von Eis gekühlt. Im Laufe von 10 Minuten werden 0,6 ml konzentrierter Salzsäure, die in 5 ml Aceton gelöst, sind der Reaktionslösung zugeführt. Nach einer Reaktionszeit von 51 Minuten wird mit Hilfe eines Rotationsverdampfers das Aceton und die Salzsäure bei 45°C ausgedampft. Restliche Monomere werden abgetrennt, indem das Produkt zwei Stunden lang bei 70°C im Vakuumtrockenschrank aufbewahrt wird. Die Ausbeute des Reaktionsproducktes beträgt 90% bezogen auf die verwendete Ausgangsstoffmenge. Das so

hergestellte Kunstharz ist in Dimethylformamid, Tetrahydrofuran und Aceton löslich. Der Schmelpunkt dieses Kunstharzes kann zwischen 90 und 300°C eingestellt werden.

**Patentansprüche**

1. Verfahren zur Herstellung eines Kunststoffes, dadurch gekennzeichnet, daß mindestens ein Polymer, dessen Ketten Triaromatmethaneinheiten als Grundbausteine aufweisen, durch die Polykondensation mindestens eines aromatischen Aldehyds und wenigstens eines aromatischen Ringsystems gebildet wird, wobei in dem Ringsystem mindestens zwie H-Atome durch mindestens zwei funktionell Gruppen ersetzt sind, durch welche die Elektronendichte an mindestens zwei Stellen im Ringsystem erhöht wird.

2. Verfahren nach Anspruch 1, dadurch gekennzeichnet, daß das Polymer bei der Polykondensation wenigstens eines aromatischen Aldehyds und mindestens eines Ringsystems gebildet wird, welches wenigstens zwei OH-Gruppen aufweist.

3. Verfahren nach Anspruch 1, dadurch gekennzeichnet, daß das Polymer bei der Polykondensation wenigstens eines aromatischen Aldehyds und einer aromatischen Ringverbindung, welche wenigstens zwei SH-Gruppen enthält gebildet wird.

4. Verfahren nach Anspruch 1, dadurch gekennzeichnet, daß das Polymer bei der Polykondensation wenigstens eines aromatischen Aldehyds und einer aromatischen Ringverbindung, welche zwei Aminogruppen enthält, gebildet wird.

5. Verfahren nach Anspruch 1, dadurch gekennzeichnet, daß das Polymer bei der Polykondensation von Benzaldehyd und Resorcin gebildet wird.

6. Verfahren nach Anspruch 1, dadurch gekennzeichnet, daß die Polykondensation durch die Verwendung wenigstens eines Katalysators, vorzugsweise Salzsäure oder Lewissäure unterstützt wird.

7. Verfahren zur Herstellung eines Kunststoffes, dadurch gekennzeichnet, daß mindestens ein Polymer, dessen Ketten Triaromatmethaneinheiten als Grundbausteine aufweisen, durch die Polykondensation von Bisphenol-A und 4-Dimethylaminobenzaldehyd gebildet wird.

8. Verfahren zur Herstellung eines Kunststoffes, dadurch gekennzeichnet, daß mindestens ein Polymer, dessen Ketten Triaromatmethaneinheiten als Grundbausteine aufweisen, durch die Polykondensation von Bisphenol-A und para-Anisaldehyd gebildet wird.

**Revendications**

1. Procédé de fabrication d'une matiére plastique, caractérisé en ce qu'au moins un polymère, dont les chaînes comprennent, comme éléments de base, des motifs de methane trisubstitué par des groupes aromatiques, est formé par la polycondensation d'au moins un aldehyde aromatique et d'au moins un système annulaire aromatique au moins deux atomes H du système annulaire étant remplacés par au moins deuxs groupes fonctionnels, qui élévent la densite électronique en au moins deux endroits du système annulaire.

2. Procédé selon la revendication 1, caractérisé en ce que le polymère est formé par la polycondensation d'au moins un aldéhyde aromatique et d'au moins un système annulaire que comprend au moins deux groupes OH.

3. Procédé selon la revendication 1, caractérisé en ce que le polymère est formé par la polycondensation d'au moins un aldéhyde aromatique et d'au moins un système annulaire, qui comprend au moins deux groupes SH.

4. Procédé selon la revendication 1, caractérisé en ce que le polymère est formé par la polycondensation d'au moins un aldéhyde aromatique et d'au moins un système annulaire, qui comprend au moins deux groupes amino.

5. Procédé selon la revendication 1, caractérisé en ce que le polymère est formé par la polycondensation de benzaldehyde et de résorcine.

6. Procédé selon la revendication 1, caractérisé en ce que polycondensation est aidée par l'utilisation d'au moins un catalyseur, de préférence l'acide chlorhydrique ou un acide de Lewis.

7. Procédé de fabrication d'une matière plastique, caractérisé en ce qu'au moins un polymère dont les chaînes comprennent, comme éléments de base, des motifs de methane trisubstitue par des groupes aromatiques, est formé par la polycondensation de bisphénol-A et de 4-diméthylaminobenzaldehyde.

8. Procédé de fabrication d'une matière plastique, caractérisé en ce qu'au moins un polymère dont les chaînes comprennent, comme éléments de base des motifs de méthane trisubstitúe par des groupes aromatiques, est formé par la polycondensation de bisphénol-A et de para-anisaldehyde.

**Claims**

1. Process for the production of a plastic, characterized in that at least one polymer whose chains contain triarylmethane units as basic units is formed by polycondensation of at least one aromatic aldehyde and at least one aromatic ring system, at least two H atoms in the ring system being replaced by at least two functional groups by means of which the electron density at at least two points in the ring system is increased.

2. Process according to Claim 1, characterized in that the polymer is formed on the polycondensation of at least one aromatic aldehyde and at least one ring system which contains at least two OH groups.

3. Process according to Claim 1, characterized in that the polymer is formed on polycondensation of at least one aromatic aldehyde and one aromatic ring compound which contains at least two SH groups.

4. Process according to Claim 1, characterized in that the polymer is formed on polycondensation of at least one aromatic aldehyde and one aromatic ring compound which contains two amino groups.

5. Process according to Claim 1, characterized in that the polymer is formed on polycondensation of benzaldehyde and resorcinol.

6. Process according to Claim 1, characterized in that the polycondensation is supported by the use of at least one catalyst, preferably hydrochloric acid or a Lewis acid.

7. Process for the production of a plastic, characterized in that at least one polymer whose chains contain triarylmethane units as basic units is formed by polycondensation of bisphenol A and 4-dimethylaminobenzaldehyde.

8. Process for the production of a plastic, characterized in that at least one polymer whose chains contain triarylmethane units as basic units is formed by polycondensation of bisphenol A and para-anisaldehyde.